# EUROPEAN PATENT APPLICATION

(11) **EP 4 054 220 A1**
(43) Date of publication of application: **07.09.2022**
(21) Application number: 19950479.6
(22) Date of filing: 28.10.2019
(51) Int. Cl.: H04W 8/20

(54) **MOBILE SERVICE ACCESS METHOD, DEVICE, AND SYSTEM, STORAGE MEDIUM, AND ELECTRONIC DEVICE**

(71) Applicant: Cheung, Tony, Hong Kong, Hong Kong (HK)
(72) Inventor: NIE, Ming Kai, Hong Kong, Hong Kong (CN); CHEUNG, Tony, Hong Kong, Hong Kong (CN)
(74) Representative: Dilg, Haeusler, Schindelmann Patentanwaltsgesellschaft mbH
(86) International application number: PCT/IB2019/059209
(87) International publication number: WO 2021/084297

(57) **Abstract**

The present invention provides mobile service access method and device, system, storage medium, and electronic device, wherein the method comprises: receiving a SIM card application protocol data unit (APDU) request transmitted by a second terminal, wherein the second terminal carries a virtual SIM card; obtaining a target APDU corresponding to the SIM card APDU request from a cloud SIM server through an unstructured supplementary data service (USSD); and forwarding the target APDU to the second terminal, wherein the target APDU is used for the second terminal to access the mobile service. The present invention solves the technical problem in the related art that a management channel of a virtual SIM card can only be based on a data service, and saves roaming costs incurred by using a virtual SIM card in a roaming region without affecting the user experience.

## Description

### FIELD OF THE INVENTION

The present invention relates to the field of communications, in particular, to mobile service access method and device, system, storage medium and electronic device.

### BACKGROUND OF THE INVENTION

In related technologies, with the development of mobile Internet, mobile terminals have become an indispensable tool for people's work and life. Many industries such as mobile payments, instant messaging, messaging, video, online games, webcasts, VR/AR (Virtual Reality/Augmented Reality), Internet of Things (IOT) rely on mobile data services. Consumers are increasingly demanding mobile data services, but when roaming across borders, high traffic charges put more pressure on consumers.

WIFI mode is limited by the coverage of hotspots, the security of use, poor mobile usability and cost (quite a large area of WIFI is not free, and the cost is very high) and other factors, can only meet the limited user needs; and mobile networks undoubtedly have WIFI in terms of mobility, coverage, and security. The main problem with the incomparable advantages is the cost of use.

The means of reducing user fees is mainly to reduce the cost of using traffic, which is nothing more than the use of low-cost traffic from local operators distributed around the world, and then share this traffic among multiple unlimited users (including people or things in IOT), and consume how much traffic is used to achieve the purpose of reducing the cost of using traffic. In order to achieve this goal in terms of specific implementation technology, it is necessary to use virtual SIM (Subscriber Identification Module, user identification card) card, through cloud-terminal coordination and cooperation, to provide users with low-cost traffic services on a global scale. The corresponding terminal equipment came into being, and the main types of the products include MIFI (Mobile WIFI, mobile hotspot), mobile phones, built-in mobile modules for various devices (security, monitoring, on-board, logistics, etc.) and so on.

When the related technology realizes the way of virtual SIM card, there are mainly two ways, i.e., e-SIM (soft SIM) and cloud-SIM, which need to transmit relevant SIM cards and related information between the cloud and ends. The use of independent terminal equipment (mobile phone, MIFI, built-in mobile module) to achieve the function of virtual SIM card, which is required to establish two independent traffic channels between the cloud background and the mobile terminal: one is the management channel being used to transmit relevant SIM cards and related information between the cloud and ends; the other channel is the service channel, that is, the channel that users use for mobile Internet access and enjoy related content services. The main problem with the related technology solution is that the management channel is based on data services, and the traffic cost is high when roaming across borders.

For the above problems in related technologies, no effective solution has been invented.

### SUMMARY OF THE INVENTION

The present invention provides an access method and device for mobile services, systems, storage media, electronic devices.

According to one embodiment of the present invention, there is provided mobile service access method being applied in a first terminal comprising: receiving a SIM card application protocol data unit (APDU) request sent by a second terminal, wherein the second terminal carries a virtual SIM card; obtaining a target APDU corresponding to the SIM card APDU request from a cloud SIM server through an unstructured supplementary data service (USSD); and forwarding to the second terminal the target APDU, wherein the target APDU is used for the second terminal to access the mobile service.

Alternatively, the target APDU corresponding to the SIM card APDU request from the cloud SIM server through USSD comprising: sending the SIM card APDU request to the cloud SIM server via USSD; and receiving the target APDU fed by the cloud SIM server through the USSD via the physical RF channel.

According to one embodiment of the present invention, there is provided another access method for mobile service being applied in a cloud SIM server comprising: receiving a SIM card application protocol data unit (APDU) request sent by a first terminal through the USSD; obtaining a target APDU according to the SIM card APDU request; and transmitting the target APDU to the first terminal via a physical radio frequency channel, wherein the target APDU is used for the second terminal to access the mobile service.

Alternatively, according to the SIM card APDU request obtains the target APDU comprising: selecting a target entity SIM card in the pool of preset SIM cards, wherein the target entity SIM card is used to process the SIM card APDU request and generate the target APDU; sending the SIM card APDU request to the target entity SIM card; and receiving the target APDU fed by the target entity SIM card.

Alternatively, the step of receiving SIM card APDU request sent by the first terminal via the USSD comprising: receiving the SIM card APDU request sent by the first terminal through the unstructured supplemental data service (USSD).

According to one embodiment of the present invention, there is provided another access method for mobile service being applied in a second terminal carrying a virtual SIM card comprising: sending a SIM application protocol data unit (APDU) request to a first terminal; receiving a target APDU fed by the first terminal based on the SIM card APDU request, wherein the target APDU is obtained by the first terminal from the cloud SIM server through the USSD; and accessing the mobile services according to the target APDU.

Alternatively, the SIM card application protocol data unit (APDU) request being transmitted to the first terminal comprising: responding to the SIM card APDU request reported by a modem of the second terminal after starting the search network, sending the SIM card APDU to the first terminal request.

Alternatively, the target APDU access to the mobile service comprising: obtaining the integrated circuit card identification code (ICCID) and/or the international mobile user identification code (IMSI) via the target APDU; using the ICCID and/or the IMSI to process the network authentication request of the access network; and accessing the mobile service through the access network after the network authentication is passed.

According to one embodiment of the present invention, there is provided mobile service access device being applied in a first terminal comprising: receiving module for receiving the SIM card application protocol data unit (APDU) request sent by a second terminal, wherein the second terminal carries the virtual SIM card; acquisition module for obtaining a target APDU corresponding to the SIM card APDU request from a cloud SIM server through unstructured supplemental data service (USSD); and forwarding module, which is for forwarding the target APDU to the second terminal, wherein the target APDU is used for the second terminal accessing to the mobile service.

Alternatively, the acquisition module comprises: a transmitting unit for transmitting the SIM card APDU request to the cloud SIM server via USSD; and receiving unit for receiving the target APDU fed by the cloud SIM server via a physical radio frequency channel.

According to one embodiment of the present invention, there is provided another mobile service access device being applied in a cloud SIM server comprising: receiving module for receiving a SIM application protocol data unit (APDU) sent by a first terminal through USSD; acquisition module for obtaining a target APDU according to the SIM card APDU request; and transmitting module for transmitting the target APDU to the first terminal through a physical radio frequency channel, wherein the target APDU is used for the second terminal to access the mobile service.

Alternatively, the acquisition module comprises: a selection unit for selecting a target entity SIM card in the preset SIM card pool, wherein the target entity SIM card for processing the SIM card APDU requests and generating the target APDU; sending unit for sending the SIM card APDU request to the target entity SIM card; receiving unit for receiving the target APDU fed by the target entity SIM card.

Optionally, the receiving module comprising: a receiving unit for receiving a SIM card APDU request sent by the first terminal via the unstructured supplemental data service (USSD).

According to one embodiment of the present invention, there is provided another mobile service access device being applied in a second terminal carrying a virtual SIM card comprising: transmitting module for sending a SIM card application protocol data unit (APDU) request to a first terminal; receiving module for receiving a target APDU fed by the first terminal based on the SIM card APDU request, wherein the target APDU is obtained by the first terminal from the cloud SIM server through the USSD; and accessing module for accessing mobile services according to the target APDU.

Optionally, the transmitting module comprising: a transmitting unit for responding to the modem of the second terminal in response to the SIM card APDU request reported after starting the search network, sending the SIM card APDU request to the first terminal.

Optionally, the access module comprising: an acquisition unit for obtaining the integrated circuit card identification code (ICCID) and/or international mobile subscriber identification code (IMSI) of the virtual SIM card through the target APDU; processing unit, for using the ICCID and/or the IMSI to process the network authentication request access network; access unit for accessing mobile services through the access network after the network authentication is passed.

According to yet another embodiment of the present invention, there is provided an access system for mobile services, comprising: a first terminal, a second terminal, a cloud SIM server, wherein the first terminal, comprising a device as described in the above embodiment; the second terminal, comprising an device as described in the above embodiment; the cloud SIM server, Including the device as described in the above embodiment.

Optionally, the first terminal and the second terminal is connected via an end-to-end D2D connection.

According to yet another embodiment of the present invention, there is further provided a storage medium in which a computer program is stored, wherein the computer program is set to run to perform the steps in any of the above method embodiments.

According to yet another embodiment of the present invention, there is further provided an electronic device comprising a memory and a processor, the memory is stored in a computer program, the processor is configured to run the computer program to perform the steps in either of the above method embodiments.

By the present invention, when the second terminal carrying the virtual SIM card is to access the mobile service, the target APDU is obtained from the cloud SIM server through the physical radio frequency channel of the first terminal, and the USSD of the first terminal is used as the management channel of the second terminal, it solves the technical problem that the management channel of the virtual SIM card in the relevant technology can only be based on data services, and saves the roaming costs generated by using the virtual SIM card in the roaming place without affecting the user experience.

### BRIEF DESCRIPTION OF THE FIGURES

The accompanying drawings described herein are intended to provide a further understanding of the present invention, forming part of the present application, schematic embodiments of the present invention and description thereof are used to explain the present invention, and do not constitute an improper limitation of the present invention.
Fig 1 is a hardware block diagram of an access terminal of a mobile service embodiment of the present invention;
Fig 2 is a communication architecture diagram of an embodiment of the present invention application;
Fig 3 is a flowchart of an access method for a mobile service according to an embodiment of the present invention;
Fig 4 is a flowchart of an access method of another mobile service according to an embodiment of the present invention;
Fig 5 is a schematic diagram of the interaction between the first terminal and the second terminal of an embodiment of the present invention;
Fig 6 is a flowchart of another mobile service access method according to an embodiment of the present invention;
Fig 7 is an interactive flowchart of a cloud SIM server and a first terminal according to an embodiment of the present invention;
Fig 8 is a block diagram of mobile service access device according to an embodiment of the present invention;
Fig 9 is a block diagram of an access device for another mobile service according to an embodiment of the present invention;
Fig 10 is a block diagram of another mobile service access device according to an embodiment of the present invention; and
Fig 11 is a block diagram of mobile service access system according to an embodiment of the present invention.

### DETAILED DESCRIPTION OF THE INVENTION

In order to enable those in the technical field to better understand the present application scheme, the following will be combined with the accompanying drawings in the embodiment of the present application, the technical solution in the embodiment of the present application is clearly and completely described, obviously, the embodiment described is only a part of the embodiment of the present application, not the entire embodiment. Based on the embodiments in the present application, all other embodiments obtained by those of ordinary skill in the art without doing creative work should fall within the scope of protection of this application. It should be noted that, in the absence of conflict, the embodiments in the present application and the features in the embodiments may be combined with each other.

It should be noted that the description and claims of the present application and the above-described drawings in the terms "first", "second", etc. are used to distinguish similar objects, and do not have to be used to describe a particular order. It should be understood that the data used in this way are interchangeable in appropriate circumstances, so that the embodiments of the present application described herein can be implemented in order other than those illustrated or described herein. Further, the terms "comprising" and "having" and any variation thereof is intended to cover an exclusionary inclusion, for example, a process comprising a series of steps or units, methods, systems, products or devices not necessarily limited to those steps or units clearly listed, but may include other steps or units that are not clearly listed or inherent to these processes, methods, products or devices.

### EXAMPLE 1

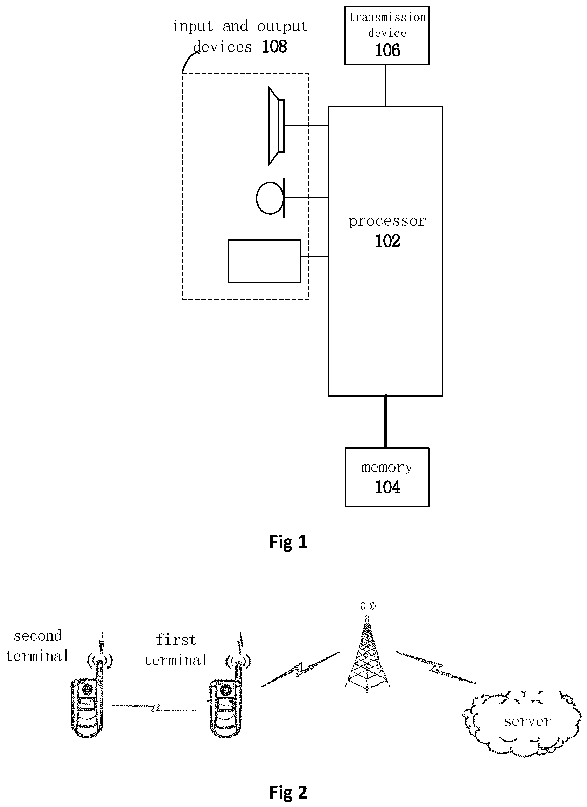

Embodiments of the methods provided in Example I of the present application may be performed in a server, terminal, or similar computing device. Taking the method running on the terminal as an example, FIG. 1 is a hardware block diagram of the access terminal of a mobile service embodiment of the present invention. As shown in FIG. 1, the terminal 10 may include one or more (only one is shown in FIG. 1) processor 102 (processor 102 may include, but is not limited to a microprocessor MCU or programmable logic device FPGA and the like processing device) and a memory 104 for storing data, optionally, the above terminal may also include a transmission device 106 for communication functions and an input/output device 108. Those of ordinary skill in the art will appreciate that the structure shown in FIG. 1 is only illustrative, which does not limit the structure of the terminal. For example, the terminal 10 may further include more or fewer components than shown in FIG. 1, or having a different configuration than shown in FIG. 1.

The memory 104 may be used to store terminal programs, e.g., software programs and modules of the application software, such as mobile service access method corresponding to the terminal program in an embodiment of the present invention, the processor 102 by running a terminal program stored in the memory 104, thus performing various functional applications as well as data processing, i.e., the method of achieving the above. The memory 104 may include a high-speed random-access memory, may also include a nonvolatile memory, such as one or more magnetic storage devices, flash memory, or other nonvolatile solid-state memory. In some examples, the memory 104 may further include a memory remotely disposed with respect to the processor 102, this remote memory may be connected to the terminal 10 via a network connection. Examples of the above networks include, but are not limited to the internet, enterprise intranets, local area networks, mobile communication networks and combinations thereof.

Transmission device 106 is for receiving or transmitting data via a network. Specific examples of the above-described networks may include a wireless network provided by the communication provider of the terminal 10. In one example, the transmission device 106 includes a network adapter (Network Interface Controller, referred to as a NIC), which may be connected to other network devices through the base station to communicate with the Internet. In one example, the transmission device 106 may be a radio frequency (referred to as RF) module, which is used to communicate with the Internet by wireless means.

The communication architecture of the present embodiment application includes a server, a first terminal, a second terminal, wherein the server is used to implement cloud SIM services on the network side, the second terminal is a terminal carrying a virtual SIM card, FIG. 2 is a communication architecture diagram of an embodiment of the present invention application.

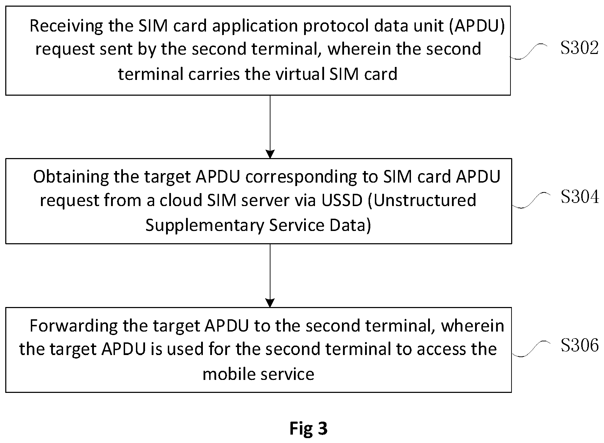

In the present embodiment, there is provided an access method for mobile services, fig. 3 is a flowchart of an access method for a mobile service according to an embodiment of the present invention, applied in the first terminal, as shown in fig. 3, the process comprises the following steps:
Step S302, receiving the SIM card application protocol data unit (APDU) request sent by the second terminal, wherein the second terminal carries the virtual SIM card;
Step S304, obtaining the target APDU corresponding to SIM card APDU request from a cloud SIM server via USSD (Unstructured Supplementary Service Data);
The present embodiment uses the USSD as the management channel of the first terminal, manages the virtual SIM card between the cloud and the terminal through the related information of SIM card transmitted by the second terminal.

Step S306, forwarding the target APDU to the second terminal, wherein the target APDU is used for the second terminal to access the mobile service.

Through the above steps, when the second terminal carrying the virtual SIM card is about to access the mobile service, the target APDU is obtained from the cloud SIM server through the physical RF channel of the first terminal, and the USSD of the first terminal is used as the management channel of the second terminal, it solves the technical problem that the management channel of the virtual SIM card in the relevant technology can only be based on data services, and saves the roaming costs generated by using the virtual SIM card in the roaming place without affecting the user experience.

The first terminal of the present embodiment is a terminal connected to the cloud SIM server through a wireless network, which may be a SIM card, accessed through a cellular network, or connected to a WIFI and other network forms to access the cloud SIM The terminal of the server.

In the present embodiment, when obtaining the target APDU, it can be obtained by requesting feedback, the first terminal and the cloud SIM server are connected through a wireless network, and obtaining target APDU corresponding to the SIM card APDU request from the cloud SIM server through the USSD, comprising:
S11, sending a SIM card APDU request to the cloud SIM server via USSD;
S12, receiving the target APDU fed by the cloud SIM server via USSD.

The USSD of the present embodiment is an interactive data service of the network based on GSM (Global System for Mobile Communications), based on the user identification module SIM card, uses the signaling channel of the GSM network to transmit data, which is the different services based on GSM's short message system technology, in terms of business development capabilities are stronger than SMS systems. When using the mobile phone keypad to enter predetermined numbers or symbols such as ^{∗}#, etc., by the network, and then press "send" key , which can send an instruction to the network, the network selects the service you need according to your instructions, or the data you need to feedback.

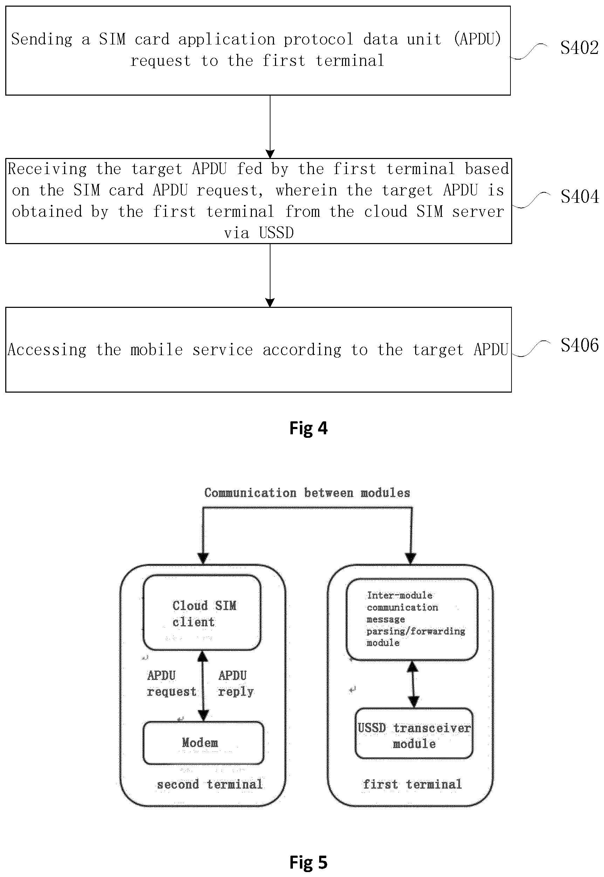

In the present embodiment it provides an access method for another mobile service, fig. 4 is a flowchart of another access method of a mobile service according to an embodiment of the present invention, applied in a second terminal, as shown in fig. 4, the process comprises the following steps:
Step S402, sending a SIM card application protocol data unit (APDU) request to the first terminal;
Step S404, receiving the target APDU fed by the first terminal based on the SIM card APDU request, wherein the target APDU is obtained by the first terminal from the cloud SIM server via USSD;
Step S406, accessing the mobile service according to the target APDU.

The first terminal of the present embodiment and the second terminal establish a connection by means of end-to-end (D2D), forming a local network, may but is not limited to the following connection methods: WIFI, BT (Bluetooth), ZigBee, USB_{∘}

Optionally, the SIM card application protocol data unit (APDU) request being sent to the first terminal includes: the SIM card reported by the modem in response to the second terminal after starting the search network APDU request, sends a SIM card APDU request to the first terminal.

FIG 5 is a schematic diagram of the interaction between the first terminal and the second terminal of the embodiment of the present invention, the second terminal triggers the SIM card APDU request via the built-in modem, and then sent to the first terminal, the first terminal sends it to the cloud SIM server after parsing it through the USSD transceiver module.

In one embodiment of the present embodiment, the mobile service is accessed according to the target APDU comprising:
S21, through the target APDU to obtain the virtual SIM card identity (ICCID) and/or the International Mobile Subscriber Identification Number (IMSI);
S22, using ICCID and/or IMSI to process network authentication requests for access networks;
S23, after the network authentication is passed, accessing the mobile service through the access network.

The mobile service of the present embodiment is a service provided by each operator, based on the type of service in the mobile communication environment, it is divided into two categories: basic service and value-added service. The basic service is the service that every user needs, such as mobile phone shutdown/recovery, reporting loss and unwinding, etc.; the value-added service is a service that operators can choose to use for users based on the basic mobile service, for different user groups and market demand, such as caller business cards, mobile phone internet traffic packages, etc.

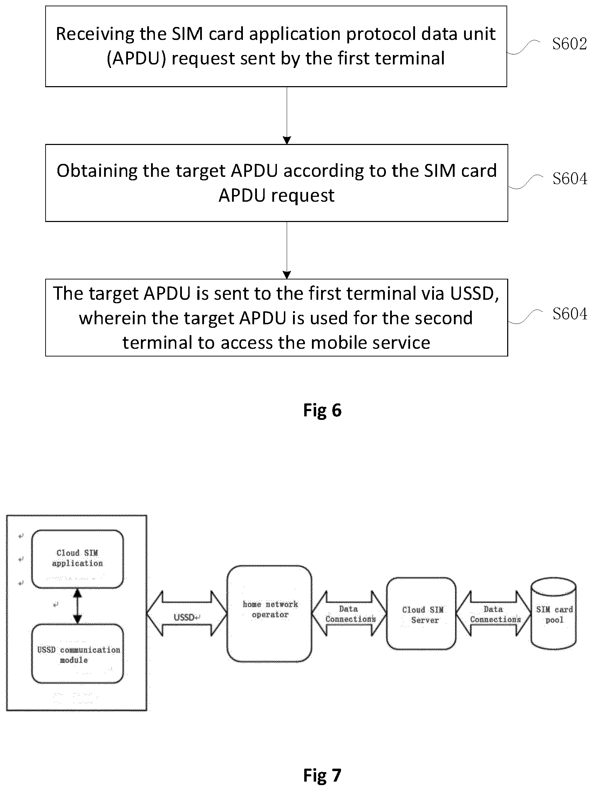

In the present embodiment provides another access method for mobile services, FIG. 6 is a flowchart of an access method of another mobile service according to an embodiment of the present invention, applied to a cloud SIM server, as shown in FIG. 6, the process comprises the following steps:
Step S602, receiving the SIM card application protocol data unit (APDU) request sent by the first terminal through the USSD;
Step S604, obtaining the target APDU according to the SIM card APDU request;
Step S606, the target APDU is sent to the first terminal via USSD, wherein the target APDU is used for the second terminal to access the mobile service.

Optionally, obtaining the target APDU according to the SIM card APDU request includes:
S31, selecting the target entity SIM card in the pool of preset SIM cards, where the target entity SIM card is used to process the SIM card APDU request and generate the target APDU;
S32, sending a SIM card APDU request to the target entity SIM card;
S33, receiving the target APDU that fed by the target entity SIM card.

FIG 7 is an embodiment of the present invention, showing interaction flowchart of the cloud SIM server and the first terminal, the first terminal interacts with the SIM server through its built-in entity SIM card home operator network. The SIM server connects to the core network of the owner of the entity SIM card through a data connection, and the SIM server connects with the SIM card pool to manage the SIM Card pool.

Optionally, receiving the SIM card APDU request sent by the first terminal via the USSD, which comprises: receiving the SIM card APDU request sent by the first terminal via the unstructured supplemental data service (USSD).

The following combined with an example of the embodiment of the present embodiment of the embodiment of a complete description. In the example, it uses the physical radio frequency channel on any ordinary mobile terminal device (referred to as terminal A, i.e., the first terminal) as a management channel, which is used to transmit the SIM card APDU between the background server in the cloud and a dedicated terminal (the terminal carrying the virtual SIM card, referred to as the terminal B, i.e., the second terminal mentioned above). The overall process includes the following steps:
S41, physical SIM card, i.e., SIM_A inserting SIM card slot S1, S1 is located in the mobile terminal A, starting the terminal A, completing normal mobile service access, accessing to the mobile network;
S42, starting the mobile terminal B, the terminal B and terminal A establish a connection through the following (but not limited to) WIFI, BT, ZigBee, USB and other ways;
S43, the terminal A starts an application program or system service that manages interaction with the terminal B;
S44, the terminal B starts the cloud SIM application. After the Modem starts searching the network, the cloud SIM application receives the SIM application protocol data unit request reported by modem and forwards it to terminal A;
S45, the terminal A sends the SIM card application protocol data unit request to the cloud SIM server via USSD;
S46, the cloud SIM server selects a SIM card from the card pool to process the SIM card application protocol data unit request, and returns the application protocol data unit after the SIM card processing is completed. The cloud SIM server sends the application protocol data unit to the terminal A via USSD;
S47, after the terminal A receives the SIM card application protocol data unit through USSD, it is forwarded to the terminal B.
S48, the cloud SIM application replies the SIM card application protocol data unit to the Modem.
S49, during the process of the terminal B accessing mobile services, the cloud SIM application needs to process the SIM card application protocol data unit request multiple times, such as obtaining ICID/IMSI, processing network authentication requests, etc., and finally implementing voice and data service functions in the terminal B.

By the description of the above embodiments, those skilled in the art will clearly understand that the method according to the above embodiments may be implemented by means of software plus the necessary common hardware platform, of course, may also be achieved by hardware, but in many cases the former is a better embodiment. Based on such understanding, the technical solution of the present invention is essentially or a portion of the prior art contribution may be embodied in the form of a software product, the computer software product stored in a storage medium (e.g., ROM / RAM, disk, optical disk), comprising a number of instructions for such that a terminal device (may be a mobile phone, computer, server, or network device, etc.) to perform the method described in each embodiment of the present invention.

### EXAMPLE 2

In the present embodiment, there is also provided an access device for mobile services and a system for implementing the above embodiments and preferred embodiments, which have been described and will not be repeated. As used below, the term "module" may implement a combination of software and/or hardware of a predetermined function. Although the device described in the following embodiments is preferably implemented in software, but hardware, or a combination of software and hardware implementation is also possible and conceived.

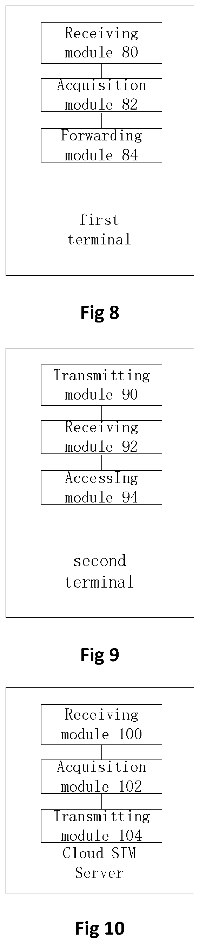

Fig 8 is a block diagram of an access device for a mobile service according to an embodiment of the present invention, applied in the first terminal, as shown in fig. 8, the device comprising: receiving module 80, acquisition module 82, forwarding module 84, of which,
the receiving module 80 for receiving the SIM card application protocol data unit (APDU) request transmitted by the second terminal, wherein the second terminal carries a virtual SIM card;
the acquisition module 82 for obtaining the target APDU corresponding to the SIM card APDU request from the cloud SIM server via unstructured supplementary data service (USS the acquisition D);
the forwarding module 84, for forwarding the target APDU to the second terminal, wherein the target APDU is used for the second terminal accessing to the mobile service.

Optionally, the acquisition module comprises: a transmitting unit for transmitting the SIM card APDU request to the cloud SIM server via USSD; the receiving unit for receiving the target APDU fed by the SIM server via the physical radio frequency channel.

Fig 9 is a block diagram of an access device for another mobile service according to an embodiment of the present invention, applied in a second terminal, as shown in fig. 9, the device comprising: transmitting module 90, receiving module 92, accessing module 94, of which,
the transmit module 90 for sending a SIM card application protocol data unit (APDU) request to the first terminal;
the receiving module 92 for receiving the target APDU based on the SIM card APDU request feedback of the first terminal, wherein the target APDU is the first terminal obtained via USSD from the cloud SIM server;
the access module 94 for accessing mobile services according to the target APDU.

Optionally, the transmitting module comprising: a transmitting unit for responding to the modem of the second terminal in response to the SIM card APDU request reported after starting the search network, sending the SIM card to the first terminal APDU request.

Optionally, the accessing module comprising: an acquisition unit for obtaining the integrated circuit card identification code (ICCID) of the virtual SIM card and/or international mobile subscriber identification code (IMSI) through the target APDU; processing unit, for using the ICCID and/or the IMSI to process the network authentication request accessing network; access unit, for accessing mobile services through the access network after the network authentication is passed.

FIG 10 is a block diagram of another mobile service access device according to an embodiment of the present invention, applied to a cloud SIM server, as shown in FIG. 10, the device comprising: receiving module 100, acquisition module 102, transmitting module 104, wherein:
Receiving module 100 for receiving the first terminal via the USSD SIM application protocol data unit (APDU) request;
acquisition module 102 for obtaining the target APDU according to the SIM card APDU request;
transmitting module for transmitting the target APDU to the first terminal through a physical radio frequency channel, wherein the target APDU is used for the second terminal to access the mobile service.

Optionally, the acquisition module comprises: a selection unit for selecting a target entity SIM card in the preset SIM card pool, wherein the target entity SIM card for processing the SIM card APDU requests and generating the target APDU; transmitting unit for sending the SIM card APDU request to the target entity SIM card; receiving unit for receiving the target APDU fed by the target entity SIM card.

Optionally, the receiving module comprising: a receiving unit for receiving a SIM card APDU request sent by the first terminal via the unstructured supplemental data service (USSD).

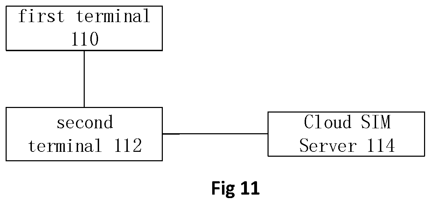

FIG 11 is a block diagram of an access system for a mobile service according to an embodiment of the present invention, as shown in FIG. 11, the system comprises: a first terminal 110, a second terminal 112, a cloud SIM server 114 connected to the first terminal, wherein the first terminal 110, comprising a device as described in the above embodiment; the second terminal 112, comprising a device as described in the above embodiment; the server 114, including the device as described in the above embodiment.

Optionally, the first terminal and the second terminal are connected via an end-to-end (D2D) connection.

it should be noted that the above modules may be implemented by software or hardware, for the latter, may be implemented by the following means, but not limited to: the above modules are located in the same processor; or, the above modules in any combination of the form of different processors.

### EXAMPLE 3

The embodiment of the present invention further provides a storage medium, the storage medium in which a computer program is stored, wherein the computer program is set to run to perform the steps in any of the above method embodiments.

Alternatively, in the present embodiment, the above storage medium may be configured to store a computer program for performing the following steps:
S1, receiving the SIM card application protocol data unit (APDU) request sent by the second terminal, wherein the second terminal carries the virtual SIM card;
S2, obtaining the target APDU corresponding to the SIM card APDU request through the unstructured supplementary data service (USSD) from the cloud SIM server APDU;
S3, forwarding the target APDU to the second terminal, wherein the target APDU is used to access the mobile service of the second terminal.

Alternatively, in the present embodiment, the above storage medium may include, but is not limited to: a U disk, read-only memory (Read-Only Memory, referred to as ROM), random access memory (Random Access Memory, or RAM for short, removable hard disks, disks, or optical discs, and other media on which computer programs can be stored.

The embodiment of the present invention further provides an electronic device, comprising a memory and a processor, the memory stores a computer program, the processor is configured to run a computer program to perform the steps in any of the above method embodiments.

Alternatively, the electronic device may further include a transmission device and an input/output device, wherein the transmission device is connected with the processor, the input/output device is connected with the processor.

Alternatively, in the present embodiment, the processor may be configured to perform the following steps through a computer program:
S1, receives the SIM card application protocol data unit (APDU) request sent by the second terminal, wherein the second terminal carries the virtual SIM card;
S2, obtains the target APDU corresponding to the SIM card APDU request through the unstructured supplementary data service (USSD) from the cloud SIM server APDU;
S3, forwards the target APDU to the second terminal, wherein the target APDU is used to access the mobile service of the second terminal.

Alternatively, the specific examples in the present embodiment may refer to the above embodiments and examples described in the optional embodiments, the present embodiment is not repeated herein.

The above-described embodiment number of the present application is for description only and does not represent the advantages and disadvantages of the embodiment.

In the above-described embodiments of the present application, the description of each embodiment has its own focus, and there is no detailed part of one embodiment, which can be referred to the relevant description of other embodiments.

In several embodiments provided in the present application, it should be understood that the disclosed technical content may be achieved by other means. wherein, the above-described embodiment of the device is only schematic, for example, the division of the unit, only a logical function division, the actual implementation may have another division, such as a plurality of units or components may be combined or may be integrated into another system, or some features may be ignored, or not performed. another point, the coupling or direct coupling or communication connection between each other shown or discussed may be indirect coupling or communication connection through some interface, unit or module, which may be electrical or other forms.

The unit described as a separate member may or may not be physically separate, the component displayed as a unit may or may not be a physical unit, i.e., may be located in one place, or may also be distributed to a plurality of network units. some or all of the units may be selected according to actual needs to achieve the purpose of the present embodiment.

Further, the functional units in each embodiment of the present application may be integrated in a processing unit, may also be each unit physically present alone, may also be two or more units integrated in a unit. the above integrated units can be implemented in the form of both hardware and software function units.

If the integrated unit is implemented in the form of a software functional unit and sold or used as a stand-alone product, it may be stored in a computer-readable storage medium. Based on such understanding, the technical solution of the present application is essentially or a portion of the prior art contribution or all or part of the technical solution may be embodied in the form of a software product, the computer software product is stored in a storage medium, comprising a number of instructions for such that a computer device (may be a personal computer, server or network equipment, etc.) to perform all or part of the steps of the method described in each embodiment of the present application. The storage media mentioned above include: U disk, read-only memory (ROM, Read-Only Memory), random access memory (RAM, Random Access Memory), removable hard disks, disks, or discs, and other media that can store program code.

The above is only a preferred embodiment of the present application, it should be noted that for those of ordinary skill in the art, without departing from the principles of the present application, a number of improvements may also be made, and these improvements should also be regarded as the scope of protection of the present application.

## Claims

1. Mobile service access method being applied in a first terminal comprising:
receiving a SIM card application protocol data unit (APDU) request sent by a second terminal, wherein the second terminal carries a virtual SIM card;
obtaining a target APDU corresponding to the SIM card APDU request from a cloud SIM server through an unstructured supplementary data service (USSD); and
forwarding to the second terminal the target APDU, wherein the target APDU is used for the second terminal to access the mobile service.

2. The method according to claim 1, wherein the target APDU corresponding to the SIM card APDU request from the cloud SIM server through USSD comprises:
sending the SIM card APDU request to the cloud SIM server via USSD; and
the target APDU receiving feedback from the cloud SIM server through the USSD.

3. Mobile service access method being applied in a cloud SIM server comprising:
receiving a SIM card application protocol data unit (APDU) request sent by a first terminal through the USSD;
obtaining a target APDU according to the SIM card APDU request; and
transmitting the target APDU to the first terminal via a physical radio frequency channel, wherein the target APDU is used for the second terminal to access the mobile service.

4. The method according to claim 3, wherein the SIM card APDU request obtains the target APDU comprising:
selecting a target entity SIM card in the pool of preset SIM cards, wherein the target entity SIM card is used to process the SIM card APDU request and generate the target APDU;
sending the SIM card APDU request to the target entity SIM card; and
receiving the target APDU fed by the target entity SIM card.

5. The method according to claim 3, wherein receiving the SIM card APDU request sent by the first terminal via the USSD comprising:
receiving the SIM card APDU request sent by the first terminal through the unstructured supplemental data service (USSD).

6. Mobile service access method being applied in a second terminal carrying a virtual SIM card comprising:
sending a SIM application protocol data unit (APDU) request to a first terminal;
receiving a target APDU fed by the first terminal based on the SIM card APDU request, wherein the target APDU is obtained by the first terminal from the cloud SIM server through the USSD; and
accessing the mobile services according to the target APDU.

7. The method according to claim 6, wherein the SIM card application protocol data unit (APDU) request being transmitted to the first terminal comprising:
responding to the SIM card APDU request reported by a modem of the second terminal after starting the search network, sending the SIM card APDU to the first terminal request.

8. The method according to claim 6, wherein the target APDU access to the mobile service comprising:
obtaining the integrated circuit card identification code (ICCID) and/or the international mobile user identification code (IMSI) via the target APDU ;
using the ICCID and/or the IMSI to process the network authentication request of the access network; and
accessing the mobile service through the access network after the network authentication is passed.

9. Mobile service access device being applied in a first terminal comprising:
receiving module for receiving the SIM card application protocol data unit (APDU) request sent by a second terminal, wherein the second terminal carries the virtual SIM card;
acquisition module for obtaining a target APDU corresponding to the SIM card APDU request from a cloud SIM server through unstructured supplemental data service (USSD); and
forwarding module, which is for forwarding the target APDU to the second terminal, wherein the target APDU is used for the second terminal accessing to the mobile service.

10. Mobile service access device being applied in a cloud SIM server comprising:
receiving module for receiving a SIM application protocol data unit (APDU) sent by a first terminal through USSD;
acquisition module for obtaining a target APDU according to the SIM card APDU request; and
transmitting module for transmitting the target APDU to the first terminal through a physical radio frequency channel, wherein the target APDU is used for the second terminal to access the mobile service.

11. Mobile service access device being applied in a second terminal carrying a virtual SIM card comprising:
transmitting module for sending a SIM card application protocol data unit (APDU) request to a first terminal;
receiving module for receiving a target APDU fed by the first terminal based on the SIM card APDU request, wherein the target APDU is obtained by the first terminal from the cloud SIM server through the USSD; and
accessing module for accessing mobile services according to the target APDU.

12. Mobile service access system comprising a first terminal, a second terminal, a cloud SIM server, wherein
the first terminal comprising a device according to claim 9;
the second terminal comprising a device according to claim 11; and
the cloud SIM server comprising a device according to claim 10.

13. The system according to claim 12, wherein the first terminal and the second terminal is connected via end-to-end (D2D) connection.

14. A storage medium, wherein the storage medium is stored with a computer program, wherein the computer program is provided to execute the method of any one of claims 1 to 8.

15. An electronic device, comprising a memory and a processor, wherein the memory is stored with a computer program, the processor is configured to run the computer program to perform the method of any one of claims 1 to 8.
